# EUROPEAN PATENT SPECIFICATION

(11) **EP 1 580 251 B1**
(45) Date of publication and mention of the grant of the patent: **03.09.2008**
(21) Application number: 05005607.6
(22) Date of filing: 15.03.2005
(51) Int. Cl.: C09K 11/64, C09K 11/77, C09K 11/80, C09K 11/84

(54) **Fluorescent lamp**
Fluoreszenzlampe
Lampe fluorescente

(30) Priority: 26.03.2004 JP 2004093390
(43) Date of publication of application: 28.09.2005
(73) Proprietor: NEC CORPORATION, Tokyo (JP)
(72) Inventor: Nomura, Koji, Shinagawa-ku Tokyo 141-0031 (JP); Imanishi, Otokazu, Shinagawa-ku Tokyo 141-0031 (JP)
(74) Representative: Glawe, Delfs, Moll

(56) References cited:
- EP-A- 0 622 440
- EP-A- 1 111 026
- JP-A- 9 320 530
- US-A- 5 376 303

## Description

### BACKGROUND OF THE INVENTION

### 1. Field of the invention

The present invention relates to a compact self-ballasted fluorescent lamp, and more particularly to a compact self-ballasted fluorescent lamp having afterglow characteristics.

### 2. Description of the Related Art

The fluorescent lamps which are used in general offices and households, such as straight tube type, ring-shaped type and bulb type ones, stop glowing immediately when the electricity supply from the power source is cut off. In the actual working conditions, however, this immediate cessation of the light emission after the electricity supply is cut off often causes numerous problems. In private households, for instance, if the set up for the house is such that a living room must be passed thorough to go to a bed room at night after the light of the living room is turned off, the movement in the darkness without seeing the furniture may lead to bumping into the furniture and even to an injury. Moreover, in the places where a large number of people gather, for example, offices, stations, underground shopping complexes and the likes, it can be easily foreseen that the interruption of the power supply due to a power failure, an earthquake or such may bring about an extremely dangerous situation.

In anticipation of such a situation, the law obliges, with the Fire Services Act and such, public facilities, large-sized offices and the likes to set battery-powered emergency lights and guide lights so that the emergency escapes and the minimum required illumination may be at least provided.

Nevertheless, when the electrical supply is cut off in case of a large-scaled earthquake, these emergency lights and guide lights alone merely secure the minimum illuminance to grasp the direction of the escape routes or the states across the room, and they are not necessarily sufficient for a person indoors to understand the situations around oneself to make prompt actions safefy. Meanwhile, there have been being developed the phosphorescent type fluorescent lamp which can maintain the minimum illumination even after the cessation of the electrical supply for that lamp.

It is known that the phosphor for the fluorescent lamp, in general, keeps glowing for a while even after its excitation by the ultraviolet radiation is stopped. This phenomenon is called the afterglow. While most of these afterglow phenomena observed are actually the fluorescence phenomena lasting for a period between several microseconds and several hundred milliseconds, some of them are known to be the phosphorescence phenomena in which the light emission continues for a period from several minutes to several hours after the excitation by the ultraviolet radiation is stopped. Making use of this phosphorescence, the phosphorescent phosphor used in the phosphorescent type fluorescent lamp has an afterglow luminance of 100 mcd/m² or higher immediately after ten minutes of illumination with a D65 standard light source with 200 Ix, as well as a long afterglow property, in which a time period required for the afterglow luminance to become attenuated to the minimum optical recognition illuminance of 0.32 mcd/m² after the cessation of the illumination is 30 minutes or longer. For such a phosphor, divalent europium and dysprosium activated strontium aluminate is preferably chosen.

The divalent europium and dysprosium activated strontium aluminate emits light in a wavelength range between about 480 nm and 530 nm, and shows excellent afterglow characteristics with a high efficiency, when excited by near-ultraviolet radiation and visible radiation emitted from the luminous tube.

In Japanese Patent Application Laid-open No. 320530 / 1997, there is disclosed a compact self-ballasted fluorescent lamp wherein a luminous tube and a lighting circuit are incorporated into the inside of an envelope comprising a glass globe and a case. With the object of diffusing the emitted light, a long-afterglow phosphor layer that is to serve as a white diffusion film is formed on the inner surface of the glass globe. The long-afterglow phosphor layer is formed of a mixture of white pigments, a polymer resin and a long-afterglow phosphor, in which the white pigments contribute to the light diffusion.

With the afore-mentioned structure, because the excitation of the long-afterglow phosphor made by the near-ultraviolet radiation and visible radiation emitted from the luminous tube, while the lamp is on, is sufficient, even if the light of the luminous tube is abruptly put out, the afterglow luminance of the glass globe can maintain enough brightness for people to make urgent actions at least for 30 minutes.

Further, Japanese Patent Application Laid-open No. 297601 / 2001 describes a means to solve a problem caused by the above structure wherein the whole inner surface of the glass globe is coated with the long-afterglow phosphor, that is, the light output from the luminous tube (normally taking the shape a straight tube type fluorescent lamp is bent) cannot reach the outside of the glass globe with effect, being interrupted by the long-afterglow phosphor.

When coatings of a phosphor and a long-afterglow phosphor are applied onto the inner surface of the fluorescent lamp, the long-afterglow phosphor also emits the fluorescence. However, when a coating of the long-afterglow phosphor is applied onto the inner surface of the glass globe which is disposed outside the luminous tube, the long-afterglow phosphor may store the light emitted from the luminous tube, but does not emit the fluorescence without irradiation of the ultraviolet radiation received, which causes the above problem.

In Japanese Patent Application Laid-open No.297601 / 2001, therefore, a coating of an afterglow phosphor is applied only to a part of the inner surface of a glove which is either made of a transparent substance such as plastic or glass or made of a translucent substance but with a diffusion film being set.

Since the bulb type afterglow fluorescent lamp serves more functions than the ordinary compact self-ballasted fluorescent lamp, it is common practice that when a large number of fluorescent lamps are used, for instance, in a public facility or a large-sized office, bulb type afterglow fluorescent lamps are used for one out of every several fluorescent lamps. In such a case, differences in illuminance and color rendering between the compact self-ballasted fluorescent lamps and the bulb type afterglow fluorescent lamps may give a conspicuously uneasy appearance.

With a structure described in Japanese Patent Application Laid-open No. 320530 / 1997, as the long afterglow phosphor layer is formed of a mixture of white pigments, a polymer resin and a long-afterglow phosphor, the illuminance of the afterglow fluorescent lamp is disadvantageously lowered by the presence of white pigments. In the case that a long-afterglow phosphor is formed on a part of the glass globe as described in Japanese Patent Application Laid-open No. 297601 / 2001, if the glass globe is transparent, even in normal use of lighting, patches appear on the surface where the long afterglow phosphor is formed, making the appearance poor, and if a diffusion film is laid on the inner surface of the glass globe, there arises the same problem of lowering the illuminance as the structure described in Japanese Patent Application Laid-open No. 320530 / 1997.

An object of the present invention is to provide a bulb type afterglow fluorescent lamp whose illuminance is not so much lowered as conspicuous among the ordinary compact self-ballasted fluorescent lamps, while long afterglow characteristics thereof is well maintained.

### SUMMARY OF THE INVENTION

The present invention relates to a compact self-ballasted fluorescent lamp comprising a luminous tube to emit light making use of a phosphor, and an envelope made of a transparent material which covers the outside of the luminous tube; wherein an afterglow phosphor layer with long afterglow characteristics is solely set over the entire surface of said envelope and the afterglow phosphor layer consists of a long-afterglow phosphor and an adhesive agent. The long-afterglow phosphor contained in the afterglow phosphor layer is preferably not less than 2 mg/ cm² but not greater than 6 mg/cm². Further, the long-afterglow phosphor is preferably at least one of a phosphor comprising a compound of the general formula MAl₂O₄ : X, Y (M is one or more elements selected from the group consisting of calcium, strontium and barium, and X and Y are each a coactivator selected from the group consisting europium, dysprosium and neodymium) as a host crystal; and a phosphor comprising a compound of the general formula Y₂O₂S : Z (Z is an activator made of one or more elements selected from the group consisting of europium, magnesium and titanium) as a host crystal. Further, the phosphor is preferably divalent europium and dysprosium activated strontium aluminate.

A compact self-ballasted fluorescent lamp of the present invention is a compact self-ballasted fluorescent lamp long-afterglow fluorescent lamp, wherein an application of a layer solely composed of a long-afterglow phosphor onto the inner surface of a glass globe that serves as a transparent envelope is made in such a way that the luminosity and light rendering thereof remain inconspicuous among ordinary compact self-ballasted fluorescent lamps.

### BRIEF DESCRIPTION OF THE DRAWING

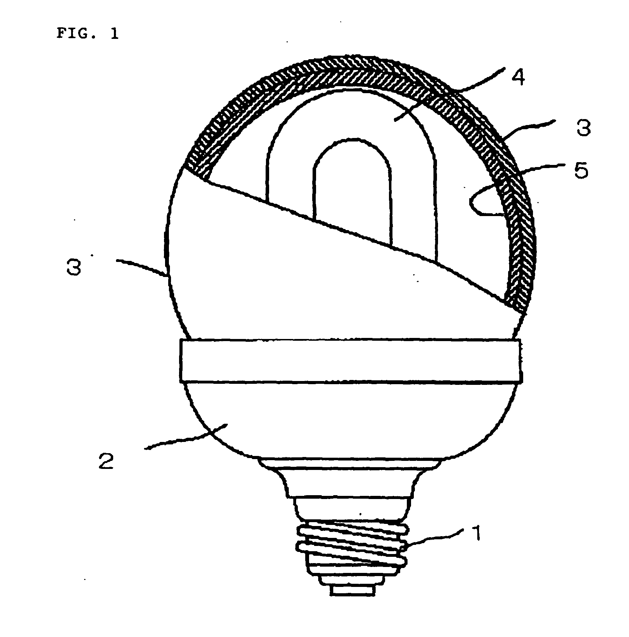

Fig. 1 is a schematic view showing a structure of an afterglow fluorescent lamp of the present invention.

### DETAILED DESCRIPTION OF THE INVENTION AND PREFERRED EMBODIMENTS

The present inventors found out that a light diffusibility equivalent to that of conventional fluorescent lamps can be readily attained through the use of a phosphor alone.

As shown in Fig. 1, a bulb type afterglow fluorescent lamp of the present invention comprises at least a cap 1, a housing 2, a luminous tube 4 made of a fluorescent lamp and an outer tube globe 3 of a transparent material, with a lighting circuit (not shown in the drawing) and such being incorporated into the housing 2, and a long-afterglow phosphor layer 5 alone is formed on the inner surface of the outer tube globe.

### Example

With reference to the preferred embodiment, the present invention is described in detail below. Example of the present invention has the same construction as shown in Fig. 1.

A long-afterglow phosphor layer 5 is formed, as follows. Divalent europium and dysprosium activated strontium aluminate, which is a long-afterglow phosphor, is mixed with an adhesive agent in which ethyl cellulose is dissolved in a solvent of xylene, and then, using the coating method, a long-afterglow phosphor layer 5 is formed on the smooth internal surface of the outer tube globe 3 of a transparent material so that 4 mg/cm² of the divalent europium and dysprosium activated strontium aluminate may lie thereon.

As the adhesive agent, an adhesive agent wherein nitrocellulose is dissolved in a solvent of butyl acetate can be also used.

Examples of a transparent material possible to use for an outer tube globe include not only glass materials such as borosilicate glass and sodium glass but also transparent resins such as polystyrene (PS), polymethyl methacrylate (PMMA) and polycarbonate (PC).

Although the outer tube globe 3 made of a transparent material itself has a smooth inner surface, once cellulose such as ethyl cellulose or nitrocellulose is mixed into the adhesive agent, the long-afterglow phosphor layer 5 formed on the smooth surface of the outer tube globe 3 can have a considerably high adhesion strength to that surface so that, with effect, the long-afterglow phosphor layer 5 formed thereon becomes difficult to be peeled off.

When the long-afterglow phosphor layer 5 contains 2 mg/cm² or more of divalent europium and dysprosium activated strontium aluminate, the light diffusibility almost equal to that of the conventional fluorescent lamp can be obtained, while, in respect of afterglow characteristics, the afterglow luminance immediately after ten minutes of illumination with a D65 standard light source with 200 Ix is 100 mcd/m² or higher, and besides such is a long afterglow property as a time period required for the afterglow luminance to become attenuated to the minimum optical recognition illuminance of 0.32 mcd/m² after the cessation of the illumination is 30 minutes or longer is well maintained. The upper limit of the amount of the phosphor is not specifically set but, in view of cost efficiency and such, 6 mg/cm² or less is preferable.

For the fluorescent lamp that is to serve as a luminous tube 4, an ordinary fluorescent lamp having a double layer structure with a diffusion layer and a phosphor layer can be utilized, but also a fluorescent lamp having only a phosphor layer that is, by the coating method, formed of a mixture of a phosphor chosen to emit white light and an adhesive agent wherein ethyl cellulose is dissolved in a solvent of xylene can be used. Hereat, an adhesive agent wherein nitrocellulose is dissolved in a solvent of butyl acetate may be also employed.

When a long-afterglow phosphor is formed on the inner surface of the outer tube globe 3, the light emitted from the luminous tube 4 is, in any case, attenuated by the long-afterglow phosphor, and, thus, it is preferable from the viewpoint of the illuminance, no diffusion film is formed in the luminous tube 4.

Further, since the phosphor layer formed in the luminous tube 4 also has the diffusion capability and this diffusion effect with the diffusion effect by the long-afterglow phosphor layer 5 formed on the inner surface of the outer tube globe produce the synergetic effect, the same light diffusibility as the ordinary fluorescent lamp without afterglow characteristics can be obtained. Accordingly, the afterglow fluorescent lamps of the present invention can be used inconspicuously even when they are employed for one fluorescent lamp with afterglow characteristics per every several ordinary fluorescent lamps in a large-sized office or a public facility.

For the long-afterglow phosphor, there can be used at least one of a phosphor comprising, as a host crystal, a compound of the general formula MAl₂O₄ wherein M is one or more elements selected from the group consisting of calcium, strontium, barium and the likes, and utilizing europium as an activator as well as dysprosium, neodymium or the like as a coactivator; and a phosphor comprising a compound of the general formula Y₂O₂S as a host crystal and utilizing at least one of europium, magnesium, titanium and the likes as an activator.

## Claims

1. A compact self-ballasted fluorescent lamp comprising a luminous tube (4) to emit light making use of a phosphor, and an envelope (3) made of a transparent material which covers the outside of the luminous tube (4); wherein an afterglow phosphor layer (5) with long afterglow characteristics is solely set over the entire inner surface of said envelope (3), **characterized in that** the afterglow phosphor layer consists of a long-afterglow phosphor and an adhesive agent.

2. A compact self-ballasted fluorescent lamp according to claim 1, wherein the adhesive agent comprises cellulose.

3. A compact self-ballasted fluorescent lamp according to claim 1 or 2, wherein the long-afterglow phosphor contained in said afterglow phosphor layer (5) is of not less than 2 mg/cm² but not greater than 6 mg/cm².

4. A compact self-ballasted fluorescent lamp according to any of claim 1 to 3, wherein said long-afterglow phosphor is at least one of
a long-afterglow phosphor comprising a compound of the general formula MAl₂O₄ : X, Y (M is one or more elements selected from the group consisting of calcium, strontium and barium, and X and Y are each a coactivator selected from the group consisting of europium, dysprosium and neodymium) as a host crystal; and
a long-afterglow phosphor comprising a compound of the general formula Y₂O₂S : Z (Z is an activator made of one or more elements selected from the group consisting of europium, magnesium and titanium) as a host crystal.

5. A compact self-ballasted fluorescent lamp according to claim 4, wherein said long-afterglow phosphor is divalent europium and dysprosium activated strontium aluminate.

## Patentansprüche

1. Kompaktleuchtstofflampe mit eingebautem Vorschaltgerät, die eine Leuchtröhre (4) zum Emittieren von Licht unter Verwendung eines Phosphors und eine Hülle (3) aus einem transparenten Material, die das Äußere der Leuchtröhre (4) bedeckt, umfasst; wobei eine nachleuchtende Phosphorschicht (5) mit langnachleuchtenden Eigenschaften allein über der gesamten inneren Oberfläche der Hülle (3) angeordnet ist, **dadurch gekennzeichnet, dass** die achleuchtende Phosphorschicht aus einem langnachleuchtenden Phosphor und einem Bindemittel besteht.

2. Kompaktleuchtstofflampe mit eingebautem Vorschaltgerät gemäß Anspruch 1, wobei das Bindemittel Cellulose umfasst.

3. Kompaktleuchtstofflampe mit eingebautem Vorschaltgerät gemäß Anspruch 1 oder 2, wobei der langnachleuchtende Phosphor, der in der nachleuchtenden Phosphorschicht (5) enthalten ist, nicht weniger als 2 mg/cm², aber nicht mehr als 6 mg/cm² beträgt.

4. Kompaktleuchtstofflampe mit eingebautem Vorschaltgerät gemäß einem der Ansprüche 1 bis 3, wobei der langnachleuchtende Phosphor mindestens einer von
einem langnachleuchtenden Phosphor, der eine Verbindung der allgemeinen Formel MAl₂O₄:X, Y (M ist eines oder mehrere Elemente ausgewählt aus der Gruppe aus Calcium, Strontium und Barium, und X und Y sind jeweils ein Koaktivator ausgewählt aus der Gruppe aus Europium, Dysprosium und Neodym) als einen Wirtskristall umfasst; und
einem langnachleuchtenden Phosphor, der eine Verbindung der allgemeinen Formel Y₂O₂S: Z (Z ist ein Aktivator hergestellt aus einem oder mehreren Elementen ausgewählt aus der Gruppe aus Europium, Magnesium und Titan) als einen Wirtskristall umfasst, ist.

5. Kompaktleuchtstofflampe mit eingebautem Vorschaltgerät gemäß Anspruch 4, wobei der langnachleuchtende Phosphor mit zweiwertigem Europium und Dysprosium aktiviertes Strontiumaluminat ist.

## Revendications

1. Lampe fluorescente à ballast intégré compacte comprenant un tube lumineux (4) pour émettre une lumière en utilisant une substance fluorescente, et une enveloppe (3) réalisée en un matériau transparent qui recouvre l'extérieur du tube lumineux (4) ; dans laquelle une couche de substance fluorescente à rémanence (5) avec des caractéristiques de longue rémanence est placée uniquement sur la surface intérieure entière de ladite enveloppe (3), **caractérisée en ce que** la couche de substance fluorescente à rémanence consiste en une substance fluorescente à longue rémanence et un agent adhésif.

2. Lampe fluorescente à ballast intégré compacte selon la revendication 1, dans laquelle l'agent adhésif comprend de la cellulose.

3. Lampe fluorescente à ballast intégré compacte selon la revendication 1 ou 2, dans laquelle la quantité de substance fluorescente à longue rémanence contenue dans ladite couche de substance fluorescente à rémanence (5) n'est pas inférieure à 2 mg/cm², mais pas supérieure à 6 mg/cm².

4. Lampe fluorescente à ballast intégré compacte selon l'une quelconque des revendications 1 à 3, dans laquelle ladite substance fluorescente à longue rémanence est au moins l'une d'une :
substance fluorescente à longue rémanence comprenant un composé de la formule générale MAI₂O₄:X,Y (M est un ou plusieurs éléments sélectionnés dans le groupe consistant en le calcium, le strontium et le barium, et X et Y sont chacun un coactivateur sélectionné dans le groupe consistant en l'europium, le dysprosium et le néodyme) en tant que cristal hôte ; et
substance fluorescente à longue rémanence comprenant un composé de la formule générale Y₂O₂S:Z (Z est un activateur constitué d'un ou de plusieurs éléments sélectionnés dans le groupe consistant en l'europium, le magnésium et le titane) en tant que cristal hôte.

5. Lampe fluorescente à ballast intégré compacte selon la revendication 4, dans laquelle ladite substance fluorescente à longue rémanence est de l'aluminate de strontium activé par l'europium et le dysprosium divalents.
